Europäisches Patentamt

European Patent Office

Office européen des brevets

(19)

(11) Veröffentlichungsnummer: **0 039 856**

**A1**

# (12) EUROPÄISCHE PATENTANMELDUNG

(21) Anmeldenummer: 81103324.0

(22) Anmeldetag: 02.05.81

(51) Int. Cl.³: **B 29 B 1/06**
**B 29 D 27/02**

(30) Priorität: 14.05.80 DE 3018380

(43) Veröffentlichungstag der Anmeldung:
18.11.81 Patentblatt 81/46

(84) Benannte Vertragsstaaten:
AT DE FR GB NL

(71) Anmelder: BAYER AG
Zentralbereich Patente, Marken und Lizenzen
D-5090 Leverkusen 1, Bayerwerk(DE)

(72) Erfinder: Hauptmann, Günter, Dr.
Carl-Leverkus-Strasse 2
D-5068 Odenthal(DE)

(72) Erfinder: Schmitz, Ernst
Schulstrasse 7c
D-5068 Odenthal(DE)

(54) Vorrichtung zum Herstellen eines Massiv- oder Schaumstoff bildenden Reaktionsgemisches aus mindestens zwei fliessfähigen Reaktionskomponenten.

(57) Bei Vorrichtungen zum Herstellen eines Massiv- oder Schaumstoff bildenden Reaktionsgemisches aus mindestens zwei fließfähigen Komponenten ist dem Mischkopf (7) zum Zwecke der Regulierung des Mischkammerdruckes ein Auslaufrohr (15) zugeordnet, das aus einem Stützrohr (16) mit einem darin angeordneten elastischen Schlauch (18) besteht, wobei zwischen Stützrohr (16) und Schlauch (18) eine druckbeaufschlagbare Kammer (21) gebildet ist, so daß der Durchströmquerschnitt des Schlauches (18) durch entsprechende Druckbeaufschlagung der Kammer (21) einstellbar ist, wobei die Mischkammer (10) nur mit einer einzigen Auslaßöffnung (11) versehen ist und der unmittelbar anschließende Schlauch (18) einen einbautenfreien Durchströmquerschnitt aufweist.

FIG 1

EP 0 039 856 A1

BAYER AKTIENGESELLSCHAFT          5090 Leverkusen 1, Bayerwerk
Zentralbereich                    Mr/RBg
Patente, Marken und Lizenzen


Vorrichtung zum Herstellen eines Massiv- oder Schaumstoff
bildenden Reaktionsgemisches aus mindestens zwei fließfähigen Reaktionskomponenten

Die Erfindung betrifft eine Vorrichtung zum Herstellen eines Massiv- oder Schaumstoff bildenden Reaktionsgemisches aus mindestens zwei fließfähigen Reaktionskomponenten, bestehend aus Vorratsbehältern für die Komponenten, von denen über Dosierpumpen Zuleitungen zu einem Mischkopf führen, in dessen Mischkammer sie über Eintrittsöffnungen einmünden, wobei die Mischkammer eine Auslaßöffnung aufweist, der ein in seinem Durchströmquerschnitt einstellbares Auslaufrohr zugeordnet ist, das aus einem starren Stützrohr mit einem darin koaxial angeordneten elastischen, dehnbaren Schlauch besteht, wobei zwischen dem Stützrohr und dem Schlauch eine Kammer angeordnet ist, die einen Druckmittelanschlußstutzen aufweist, und wobei die Enden des Schlauches mit dem Stützrohr Abdichtungen bilden.

Mittels eines in seinem Durchströmquerschnitt einstellbaren Auslaufrohres läßt sich in der Mischkammer ein dem zu erzeugenden Gemisch angepaßter Staudruck erzielen, der die Vermischung optimiert. Ein solcher Staudruck ist insbesondere bei der Herstellung von Schaumstoffen von Vorteil, weil man damit die Größe der Zellen regulieren kann.

Le A 20 268-Ausland

Aus der GB-PS 975 080 (= US-PS 3 220 801) ist eine Vorrichtung obiger Art bekannt, bei der an den Mischkammerauslaß ein mit Querbohrungen versehenes Auslaßstück anschließt, das mit einem Ansatz in den Schlauch hineinragt. Vom entgegengesetzten Ende des Schlauches ragt ein Ringansatz des eigentlichen Auslaßstückes ebenfalls in den Schlauch hinein, so daß zwischen diesen beiden Ansätzen und zwischen den Ansätzen und dem sie konzentrisch umgebenden Schlauch jeweils ein Spalt vorhanden ist. Dieser Aufbau ist sehr aufwendig und zeigt eine außerordentlich ungünstige strömungstechnische Ausbildung, so daß das Reaktionsgemisch zu lange in strömungstoten Winkeln verweilen und bereits dort ausreagieren kann. Die Reinigung des Auslaufrohres bereitet ungewöhnliche Schwierigkeiten und ist nur mit erheblichen Mengen an fluidem Spülmittel möglich.

Bei anderen vorbekannten Vorrichtungen ohne elastischen Schlauch weisen die Auslaufrohre zu diesem Zweck einen verschiebbaren Staukörper auf (US-PS 2 948 928) oder man benutzt in der Praxis behelfsweise als Auslaufrohr einen einfachen elastischen Schlauch, der von außen mittels einer Schraubklammer zusammendrückbar ist. Bei beiden Ausführungsformen wird der an sich in der Regel günstige kreisförmige Auslaufquerschnitt deformiert, was sich störend auf den Querschnitt des ausströmenden Strahls überträgt und dem Aufbau einer laminaren Strömung hinderlich ist.

Es gilt die Aufgabe zu lösen, eine Vorrichtung zu schaffen, bei der der aus der Mischkammer austretende Strahl beim Passieren des Auslaufrohres seine Querschnittsform im wesentlichen unverändert beibehält und das Auslaufrohr sich leicht reinigen läßt.

Le A 20 268-Ausland

Gelöst wird diese Aufgabe dadurch, daß die Mischkammer nur mit einer einzigen Auslaßöffnung versehen ist, an welche unmittelbar der Schlauch anschließt, der einen einbautenfreien Durchströmquerschnitt aufweist.

Durch diese Gestaltung wird erreicht, daß man einen gewünschten Auslaßquerschnitt im Auslaufrohr mittels des Druckmediums einstellen kann, ja sogar während des Mischvorganges verändern kann. Dabei bleibt bei Verwendung eines Stützrohres mit kreisförmigem Querschnitt auch ein Strahl mit kreisförmigem Querschnitt erhalten. Auch bei Auslaufrohren mit elliptischem Querschnitt, die für besondere Anwendungsfälle zweckmäßig sein können, bleibt die vorgegebene Querschnittsform im wesentlichen erhalten. Durch diese strömungsgünstige Form des Auslaufrohres wird Schlierenbildung und Lunkerbildung im Fertigteil vermieden. Bei der Schaumstoffherstellung kann durch kontinuierliche Änderung des Druckes in der Druckkammer der Rückstau auf die Mischkammer entsprechend geändert werden, wodurch sich auch der Mischkammerdruck ändert. Der konstruktive Aufwand ist relativ gering, und der einbautenfreie Durchströmquerschnitt gewährleistet leichtes Reinigen und vermeidet Ablagerungen.

Die Erfindung ist nicht nur auf Vorrichtungen mit Hochdruckmischköpfen, sondern auch auf solche mit Niederdruckmischköpfen anwendbar.

Durch Einstellung eines geringen Gegendruckes in der Druckkammer des Auslaufrohres wird ein schnelles Füllen der Mischkammer gewährleistet. Schon bei einem Luftdruck von 0,5 bar wird der Auslauf verschlossen, so daß nach Beendigung des Mischvorganges und Spülen der Mischkammer die Mischkammer zum Vermeiden jeglichen Filmes aus Reaktionsgemisch mit einer der Komponenten vorab gefüllt gehalten werden kann, so daß keinerlei Luft darin enthalten ist. Das Umschalten vom niedrigen Druck der Anfahrphase auf den höheren Betriebsdruck und das Rückschalten auf den niedrigeren Druck bei Beendigung des Mischvorganges erfolgt vorzugsweise automatisch.

Ist die Druckkammer nicht beaufschlagt, legt sich der Schlauch unter dem Druck des ausströmenden Strahls gegen das Stützrohr an.

Vorzugsweise ist der Schlauch in Längsrichtung vorgespannt. Dadurch schnürt sich der Schlauch ein, ohne daß die zwischen Schlauch und Stützrohr befindliche Kammer druckbeaufschlagt worden wäre. Während des Mischvorganges erweitert nun das ausströmende Reaktionsgemisch den Durchströmquerschnitt des Schlauches, bis der Schlauch an der Stützwand zum Anliegen kommt. Wenn nun ein Druckmittel in die Kammer eingegeben wird, läßt sich der Durchströmquerschnitt in gewünschter Weise exakt einstellen, um den Staudruck in der Mischkammer zu regulieren.

Nach einer vorteilhaften Ausführungsform sind Stützrohr und Schlauch zwischen zwei Flanschen, die untereinander durch Spannstangen verbunden sind, eingespannt, wobei die Enden des Schlauches über die Enden des Stützrohres nach außen gestülpt sind. Der Schlauch ist leicht auswechselbar. Dabei kann einer der Flansche direkt mit dem Gehäuse ein Stück bilden. Andererseits kann auch das Auslaufrohr zusammen mit zwei Flanschen als abnehmbare Einheit gestaltet sein, wobei dann einer der Flansche am Mischkopf befestigt werden muß.

In einer Zeichnung ist die erfindungsgemäße Vorrichtung in einem Ausführungsbeispiel rein schematisch dargestellt und nachstehend näher erläutert. Es zeigen:

Le A 20 268-Ausland

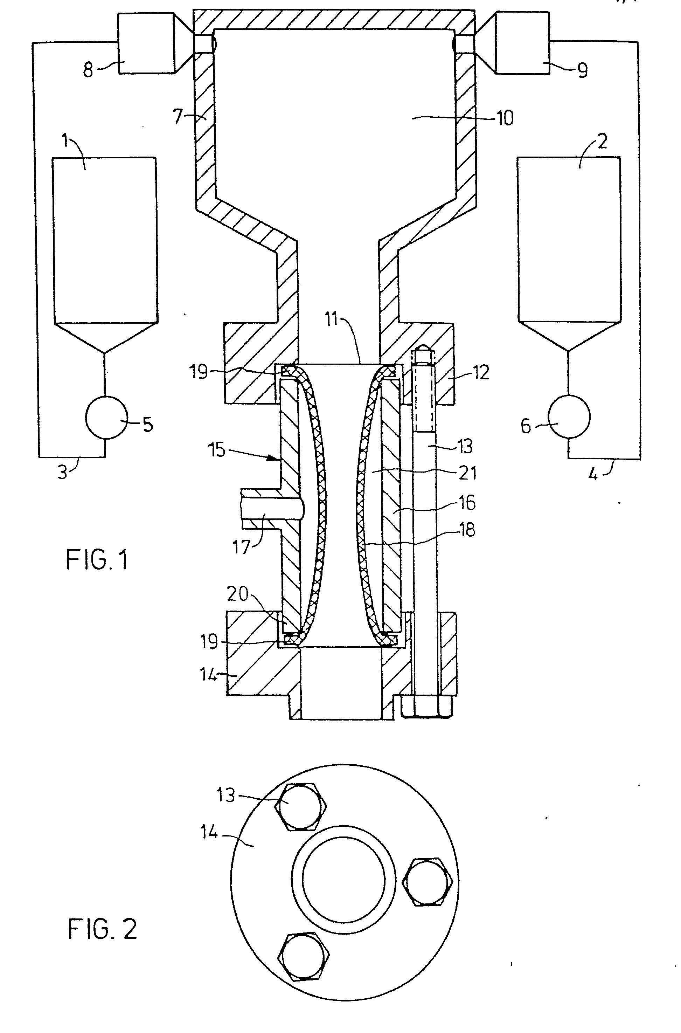

Fig. 1    die Vorrichtung teilweise im Schnitt und

Fig. 2    eine Draufsicht auf den Flansch des Auslaufrohres.

Von Vorratsbehältern 1, 2 führen Zuleitungen 3, 4 über Dosierpumpen 5, 6 zu einem Mischkopf 7 und münden über Einspritzdüsen 8, 9 in eine Mischkammer 10. Die Auslaßöffnung 11 der Mischkammer 10 ist mit einem Flansch 12 umgeben, der über Spannschrauben 13 mit einem zweiten Flansch 14 lösbar verbunden ist. Zwischen den beiden Flanschen 12, 14 ist ein Auslaufrohr 15 eingespannt. Dieses besteht aus einem äußeren starren Stützrohr 16, das mit einem Druckluftanschlußstutzen 17 versehen ist, und aus einem elastischen, dehnbaren Schlauch 18. Die Enden 19 des Schlauches 18 sind zwischen den Enden 20 des Stützrohres 16 und den Flanschen 12, 14 abdichtend eingespannt. Zwischen dem Stützrohr 16 und dem Schlauch 18 ist eine druckbeaufschlagbare Kammer 21 vorgesehen. Der Schlauch 18 weist eine Vorspannung in seiner Längsrichtung auf, so daß sein freier Durchströmquerschnitt eingeschnürt ist.

Patentansprüche

1. Vorrichtung zum Herstellen eines Massiv- oder Schaumstoff bildenden Reaktionsgemisches aus mindestens zwei fließfähigen Reaktionskomponenten, bestehend aus Vorratsbehältern (1, 2) für die Komponenten, von denen über Dosierpumpen (5, 6) Zuleitungen (3, 4) zu einem Mischkopf (7) führen, in dessen Mischkammer (10) sie über Einspritzöffnungen (8, 9) einmünden, wobei die Mischkammer (10) eine Auslaßöffnung (11) aufweist, der ein in seinem Durchströmquerschnitt einstellbares Auslaufrohr (15) zugeordnet ist, das aus einem starren Stützrohr (16) und einem darin koaxial angeordneten elastischen, dehnbaren Schlauch (18) besteht, wobei zwischen dem Stützrohr (16) und dem Schlauch (18) eine Kammer (21) angeordnet ist, die einen Druckmittelanschlußstutzen (17) aufweist, und wobei die Enden (19) des Schlauches (18) mit dem Stützrohr (16) Abdichtungen bilden, dadurch gekennzeichnet, daß die Mischkammer (10) nur mit einer einzigen Auslaßöffnung (11) versehen ist, an welche unmittelbar der Schlauch (18) anschließt, der einen einbautenfreien Durchströmquerschnitt aufweist.

2. Vorrichtung nach Anspruch 1, dadurch gekennzeichnet, daß der Schlauch (18) in Längsrichtung vorgespannt ist.

Le A 20 268-Ausland

FIG. 1

FIG. 2

**Europäisches Patentamt**

0039856

Nummer der Anmeldung

**EUROPÄISCHER RECHERCHENBERICHT**

EP 81 10 3324

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| X | DE - A - 2 539 477 (GRACE) <br> * Insgesamt * | 1 |
| | -- | |
| X | FR - A - 2 250 619 (LOUIS) <br> * Insgesamt * | 1 |
| | -- | |
| X | US - A - 3 239 100 (PETERSON) <br> * Abbildung 5 * | 1 |
| | -- | |
| A | US - A - 3 181 839 (JENNINGS) <br> * Abbildung 1 * | 1 |
| | ---- | |

**KLASSIFIKATION DER ANMELDUNG (Int. Cl.³)**

B 29 B 1/06
B 29 D 27/02

**RECHERCHIERTE SACHGEBIETE (Int. Cl.³)**

B 29 B 1/00
B 29 D 27/00
B 05 B 1/00
B 01 F 5/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-08-1981 | KUSARDY |

EPA form 1503.1 06.78